# FASCICULE DE BREVET EUROPEEN

(11) **EP 0 324 694 B1**
(45) Date de publication et mention de la délivrance du brevet: **25.05.1994**
(21) Numéro de dépôt: 89400103.1
(22) Date de dépôt: 12.01.1989
(51) Int. Cl.: G02B 6/12

(54) **Dispositif d'optique intégrée permettant de séparer les composantes polarisées d'un champ électromagnétique guide et procédé de réalisation du dispositif**
Integriert-optische Vorrichtung für die Trennung der Polarisationskomponenten eines elektromagnetischen Feldes und Verfahren für deren Herstellung
Integrated-optics device for the separation of the polarization components of an electromagnetic field, and method for manufacturing it

(30) Priorité: 14.01.1988 FR 8800357
(43) Date de publication de la demande: 19.07.1989
(73) Titulaire: COMMISSARIAT A L'ENERGIE ATOMIQUE, 75015 Paris Cédex 15 (FR)
(72) Inventeur: Valette, Serge, F-38100 Grenoble (FR)
(74) Mandataire: Dubois-Chabert, Guy

(56) Documents cités:
- FR-A- 2 558 271
- PATENT ABSTRACTS OF JAPAN, vol. 8, no. 151 (P-286)[1588], 13 juillet 1984, page 68 P 286; & JP-A-59 48 713
- PATENT ABSTRACTS OF JAPAN, vol. 9, no. 76 (P-346)[1799], 5 avril 1985, page 160 P 346; & JP-A-59 208 509
- PATENT ABSTRACTS OF JAPAN, vol. 10, no. 140 (P-458)[2197], 23 mai 1986, page 100 P 458; & JP-A-60 260 008
- PATENT ABSTRACTS OF JAPAN, vol. 8, no. 163 (P-290)[1600], 27 juillet 1984, page 147 P 290; & JP-A-59 60 405
- IEE PROCEEDINGS, vol. 133, partie J, no. 4, août 1986, pages 264-266, Stevenage, Herts, GB; N. NOURSHARGH et al.: "Plasma deposition of GeO2/SiO2 and Si3N4 waveguides for integrated optics"
- PATENT ABSTRACTS OF JAPAN, vol. 8, no. 219 (P-306)[1656], 5 octobre 1984, page 104 P 306; & JP-A-59 102 203

## Description

L'invention concerne un dispositif d'optique intégrée permettant de séparer les composantes polarisées d'un champ électromagnétique guidé et un procédé de réalisation du dispositif.

Il est usuel d'utiliser des dispositifs d'optique intégrée dans le cas, par exemple où l'on désire faire passer un faisceau lumineux transporté par une fibre optique vers une autre fibre optique. Le cas le plus simple d'un tel transfert consiste à effectuer un raccord bout à bout de deux fibres optiques. On peut également procéder au transfert de tout ou partie de l'énergie transportée en intercalant un dispositif d'optique intégrée entre deux fibres optiques.

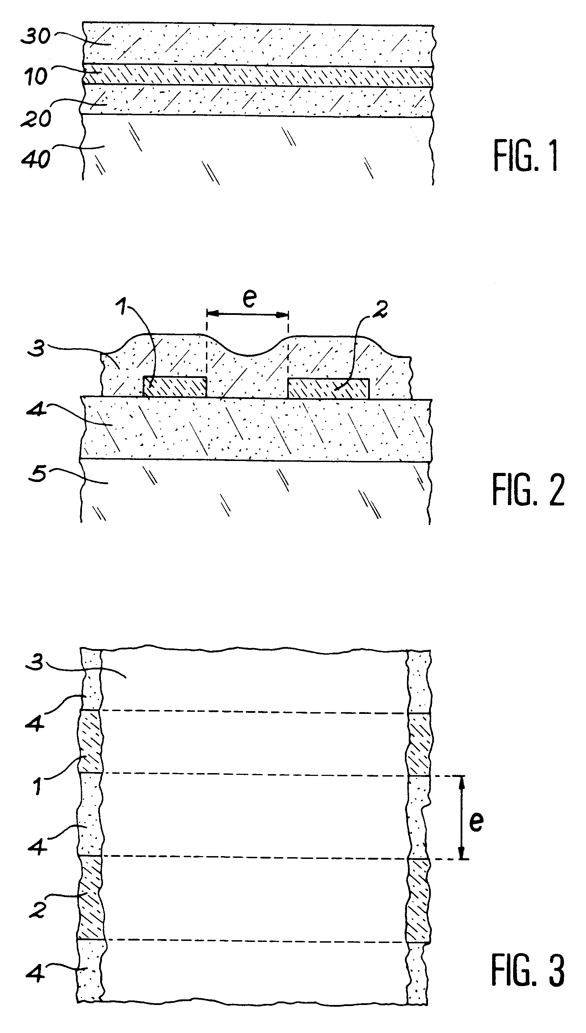

Le dispositif le plus simple représenté sur la figure 1 consiste en une structure de guidage qui comprend une couche de guidage mince 10 appelée coeur, intercalé entre deux couches 20, 30, l'ensemble étant déposé sur un substrat 40. L'indice de réfraction du coeur est toujours supérieur aux indices de réfraction des couches adjacentes 20, 30.

Le faisceau lumineux se propage dans cette couche de guidage 10, avec une partie évanescente dans chacune des couches adjacentes. La figure 1 représente une coupe transversale suivant le sens de propagation.

Dans une telle structure, un champ électromagnétique peut se propager suivant deux types de modes de propagation : un premier type de modes dits transverses ou quasi-transverses électriques (notés TE), pour lesquels le champ électrique associé à l'onde électromagnétique est dans le plan de la couche de guidage, et un deuxième type de modes dits transverses ou quasi-transverses magnétiques (notés TM), pour lesquels c'est le champ magnétique qui est dans le plan de la couche. En général, les dispositifs d'optique intégrée sont réalisés de façon à ne permettre la propagation que d'un seul mode de chaque type ; ces modes sont appelés modes fondamentaux. Dans le reste de la description on considèrera pour plus de simplicité le cas de structures ne permettant la propagation que de ces modes fondamentaux. Toute onde dont le champ electrique associé est incliné par rapport à celui de ces deux modes se décompose nécessairement en deux composantes, l'une de type TE, l'autre de type TM.

Un dispositif d'optique intégrée également connu permet d'effectuer des transferts par couplage. Un exemple d'un tel circuit a été représenté, vu en coupe transversale perpendiculaire au sens de propagation, sur la figure 2, et vu de dessus sur la figure 3. La structure de coupleur d'ondes électromagnétiques en optique intégrée représenté sur ces figures comprend deux couches 3, 4 généralement identiques entre lesquelles ont été placées deux couches 1, 2 disjointes, d'indice plus fort que ceux des couches 3 et 4 et identique pour les deux couches, ces couches se trouvant sur un même plan comme on peut le voir à partir de la coupe représentée sur la figure 2. Les couches 1 et 2 associées aux couches adjacentes 3 et 4 forment des guides optiques parallèles. L'ensemble est déposé sur un substrat 5. Le choix de l'intervalle e entre les deux couches formant chacun des coeurs 1, 2 proprement dit, permet d'agir sur les coefficients de couplage K_{E} et K_{M} entre les deux guides. Ces coefficients sont également fonction des paramètres caractérisant les guides. K_{E} et K_{M} représentent respectivement les coefficients de couplage des modes TE et TM (modes guidés).

Lorsque l'on injecte une onde électromagnétique dans le guide de coeur 1, la totalité de l'énergie de cette onde peut passer dans le guide de coeur 2 au bout de distances de propagation fonctions des coefficients de couplage K_{E}, K_{M}, à condition que les vitesses de propagation des modes guidés de même type soient identiques dans chacun des guides pris indépendamment. Dans le cas où les vitesses de propagation ne sont pas égales, le transfert d'énergie sera partiel, mais atteindra un maximum au bout de distances qui sont fonctions des coefficients de couplage K_{E} et K_{M}, mais aussi de la différence entre ces vitesses.

On utilise classiquement des structures guidées ayant une faible différence d'indice Δn entre le coeur et les deux couches entre lesquelles il est intercalé, car ainsi la structure de guidage est très peu dépendante du type de la polarisation de l'onde. Ceci est un avantage, on peut en effet guider une onde lumineuse avec une telle structure sans se préoccuper de sa polarisation, les modes TE et TM ayant alors des profils de champs et des indices effectifs très voisins (on rappelle que l'indice effectif est le rapport entre la vitesse de la lumière et la vitesse du mode guidé). Par ailleurs, ce type de structures permet un rendement de couplage élevé entre une fibre optique monomode et les guides de lumière.

Or, il s'est avéré nécessaire dans certaines applications d'utiliser des structures de guidage à faibles différences d'indices (faibles Δn) de manière à ce qu'au moins un des guides soit très peu sensible à la polarisation et possède un bon rendement de connexion avec une fibre monomode, et de pouvoir en même temps séparer les composantes polarisées du champ électromagnétique guidé. C'est le cas par exemple lorsque l'on cherche à réaliser un récepteur à polarisation multiple (en terminologie anglo-saxonne "Polarization diversity receiver), c'est aussi le cas lorsque l'on cherche à réaliser des capteurs optiques utilisant la polarisation lumineuse.

Un abrégé de brevet japonais, volume 8, numéro 151 du 13 juillet 1984 (JP-A-59 48713) concerne un élément optique de guidage permettant de démultiplexer les polarisations TE et TM d'une onde. Cet élément comprend deux guides d'ondes optiques placés sur un substrat. Les deux guides sont proches l'un de l'autre sur une longueur déterminée de manière à permettre un couplage de l'énergie de l'un des guides vers l'autre. Les indices de réfraction de chacun des guides sont choisis de sorte que l'un des guides est capable de propager une onde selon les modes TE et TM, alors que l'autre ne peut propager cette onde que selon le mode TM. Ainsi, lorsque le couplage de l'énergie d'un guide vers l'autre a eu lieu, les deux modes TE et TM sont séparés, le premier guide guidant l'énergie selon le mode TE et le second guide guidant l'énergie selon le mode TM. Ce dispositif permet de réaliser un démultiplexage des deux composantes des modes TE et TM d'une onde polarisée.

Un abrégé de brevet japonais, volume 10, numéro 140 du 23 mai 1986 (JP-A-60 260 008) décrit un élément optique constituant un coupleur directionnel, réalisé au moyen de couches superposées. L'élément est constitué d'un substrat sur lequel sont formés deux guides d'ondes optiques parallèles entre eux et séparés par une distance constante sur toute leur longueur.

La présente invention permet de résoudre le problème d'être à la fois très peu sensible à la polarisation d'une onde lumineuse tout en permettant la séparation des deux composantes polarisées TE et TM. Elle concerne un dispositif d'optique intégrée du type coupleur qui par sa structure particulière et ses caractéristiques optiques permet d'obtenir les deux fonctions désirées.

L'invention a donc pour objet un dispositif d'optique intégrée pour séparer les composantes polarisées d'un champ électromagnétique guidé, tel que défini à la revendication 1.

De façon avantageuse, les bandes comportent, dans deux plans parallèles, une partie rectiligne espacée par un intervalle constant et une partie courbée réalisée dans le prolongement de la partie rectiligne correspondante, espacées d'un intervalle croissant de manière à diminuer jusqu'à l'annuler le couplage entre les deux structures. Après annulation du couplage, l'intervalle entre les deux bandes peut redevenir constant.

La séparation des modes par deux structures de guidage est réalisée par augmentation de l'intervalle de couplage au-delà de la distance de couplage d'un des modes, les dimensions des bandes restant constantes, et/ou en modifiant éventuellement les dimensions des bandes.

On peut réaliser la bande de guidage d'indice n1 au moyen d'oxyde de silicium faiblement dopé, les deuxième et troisième couches des deux structures étant réalisées par de l'oxyde de silicium, et la bande de guidage d'indice n2 au moyen d'oxyde de silicium fortement dopé.

On peut également réaliser la bande d'indice n1 au moyen d'oxyde de silicium faiblement dopé, la bande d'indice n2 étant constituée soit de nitrure de silicium, soit d'alumine, soit d'oxynitrure de silicium, les deuxième et troisième couches des deux structures étant constituées d'oxyde de silicium.

L'invention a également pour objet un procédé de fabrication du dispositif d'optiqué intégrée tel que defini précédemment, ledit procédé de fabrication étant tel que défini à la revendication 5.

Les couches d'indice n5, n4, n3 étant de façon avantageuse en oxyde de silicium dopé ou non, on dépose par exemple ces couches par une technique dénommée PECVD correspondant à un dépôt par décomposition chimique en phase vapeur assistée par plasma.

De toute façon, les caractéristiques de l'invention apparaîtront mieux à la lumière de la description qui va suivre. Cette description porte sur des exemples de réalisation qui n'ont naturellement rien de limitatif. Des dessins sont annexés à cette description sur lesquels :
- la figure 1 représente une structure de guidage vue en coupe selon un plan parallèle au sens de propagation des ondes selon l'art antérieur ;
- la figure 2 représente un coupleur vu en coupe selon un plan perpendiculaire au sens de propagation des ondes selon l'art antérieur ;
- la figure 3 représente un coupleur selon la figure 2 en vue de dessus selon l'art antérieur ;
- la figure 4 représente un exemple de dispositif d'optique intégrée selon l'invention en vue de dessus ;
- la figure 5 représente le dispositif selon l'invention vu selon une coupe transversale V-V dans la partie rectiligne ;
- la figure 6 représente le dispositif selon l'invention vu selon une coupe transversale VI-VI dans la partie courbée ;
- la figure 7 représente le dispositif selon l'invention vu selon une coupe longitudinale correspondant au sens de propagation des ondes, relatif à un premier mode de réalisation ;
- la figure 8 représente une coupe longitudinale du dispositif selon l'invention relative à une deuxième, une troisième et une quatrième variantes de réalisation ;
- la figure 9 représente les courbes caractéristiques des guides de coeurs 1 et 2 traduisant les variations des indices effectifs pour chacun des modes en fonction des variations de l'épaisseur de ces coeurs ;
- les figures 10 à 14 représentent chacune une étape du procédé réalisation du dispositif selon l'invention.

Une structure de guidage classique et un coupleur ont été représentés respectivement sur les figures 1, 2 et 3 et déjà décrites dans la partie introductive.

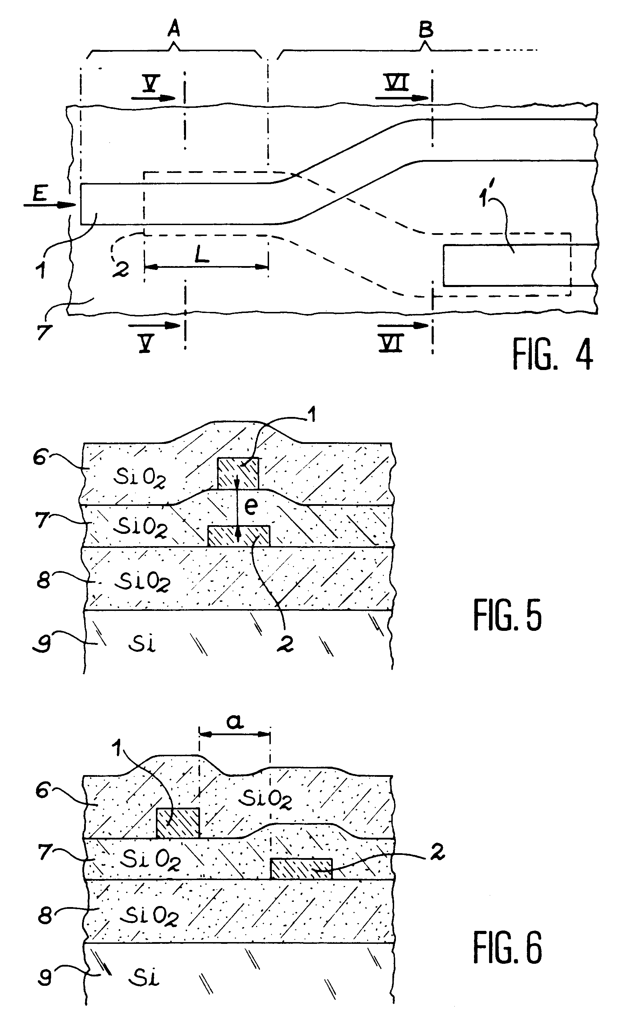

La figure 4 représente donc un exemple de réalisation du dispositif selon l'invention. Cette vue représente une vue de dessus du dispositif. Le dispositif comprend deux bandes de guidage 1 et 2 qui se trouvent selon cet exemple particulier superposées puis écartées, mais non dans le même plan. Les bandes comportent une partie A, partie dans laquelle elles sont sensiblement rectilignes, et une partie B, partie dans laquelle elles sont écartées et courbées. Une couche 7 d'indice de réfraction plus faible est placée entre les deux bandes constituant les coeurs des deux structures guidées selon ce mode particulier de réalisation. D'autres détails de réalisation seront précisés au fur et à mesure de la description.

L'onde lumineuse est par exemple reçue par la bande de guidage 1, c'est pourquoi on peut prévoir que cette bande présente un prolongement par rapport à la bande 2 de manière à recevoir cette onde sans que celle-ci soit reçue également par la bande de guidage 2. Les bandes de guidage telles que la bande 1 ou la bande 2 sont classiquement dénommées coeur dans une structure de guidage. Ces coeurs prennent une forme courbée au bout d'une longueur commune prédéterminée L qui est légèrement inférieure à la longueur de couplage Lc, c'est-à-dire à la longueur au bout de laquelle l'énergie d'un des modes transportée par le coeur 1 a été transférée dans le coeur 2. Les coeurs 1 et 2 sont ensuite suffisamment écartés et espacés de manière à ce qu'il n'y ait plus interaction entre eux. Pour des questions de géométrie, il peut être utile de récupérer l'énergie sur chacun des coeurs 1 et 2 au moyen d'un coeur additionnel qui a les mêmes dimensions que le coeur de départ. C'est pourquoi, à titre d'exemple, on a représenté sur cette figure un tronçon de coeur additionnel 1' superposé au coeur 2 qui permet de récupérer par couplage toute l'énergie provenant de ce coeur 2. Ce tronçon de coeur 1' est superposé à l'extrémité du coeur 2 sur une longueur égale à la longueur de couplage.

Comme on peut le voir à partir des figures 5 et 6, qui correspondent respectivement à une coupe V-V et à une coupe VI-VI prises selon un plan perpendiculaire au sens de propagation des ondes, le dispositif selon l'invention comporte deux structures de guidage. Une première structure comprend le coeur 1 d'indice de réfraction n1 intercalé entre deux couches 6, 7, d'indice de réfraction n3, n4. La deuxième structure de guidage comporte le coeur 2 d'indice de réfraction n2 intercalé entre deux couches 7, 8, d'indice n4, n5, la couche 7 étant commune aux deux structures. Ces deux structures sont déposées sur un substrat 9. Le substrat 9 est avantageusement du silicium et les couches 6, 7, 8 sont avantageusement de l'oxyde de silicium et telles que n3=n4=n5=n. Bien entendu, le substrat pourrait être également du verre ou de la silice ou tout autre matériau sur lequel on peut réaliser des dépôts et les couches 6, 7, 8 peuvent être constituées par des matériaux différents, ces derniers devant avoir cependant respectivement un indice de réfraction inférieur à celui du coeur qu'ils entourent. On choisit pour l'une des deux structures des matériaux tels que la différence d'indice de réfraction entre le coeur et les couches entre lesquelles il est intercalé soit assez faible, et on choisit pour l'autre structure des matériaux tels que la différence d'indice de réfraction entre l'autre coeur et les couches entre lesquelles il est intercalé soit forte. On choisit par exemple, avec des couches 6, 7, 8 en oxyde de silicium, un coeur 1 en silice dopée (n1-n=5.10⁻³) et un coeur 2 en alumine (n2-n=1,5.10⁻¹) ou en nitrure de silicium (n2-n=5,5.10⁻¹) ou en oxynitrure de silicium [(n2-n) pouvant varier entre quelques 10⁻¹ et quelques 10⁻²].

L'indice effectif pour un faisceau lumineux se propageant dans une structure guidée dépend à la fois de l'indice réel des couches traversées, des dimensions de celles-ci et de la nature du mode de propagation.

Comme les modes TE et TM n'ont pas le même répartition spatiale, on conçoit qu'ils n'aient pas les mêmes indices effectifs.

L'une des structures (1) ayant une faible variation d'indice va permettre donc d'avoir des indices effectifs pour les modes TE et TM sensiblement identiques, l'autre structure (2) ayant une forte variation d'indice va permettre d'avoir des indices effectifs différents pour les deux modes. Par ailleurs, ces deux structures de guidage sont conçues pour avoir entre elles des indices effectifs différents pour l'une des composantes polarisées du champ électromagnétique et égaux pour l'autre composante, l'intervalle e entre leurs coeurs étant tel qu'il permet un couplage des énergies entre le guide de coeur 1 et le guide de coeur 2. Seuls les modes pour lesquels les indices effectifs sont identiques vont passer d'un coeur à l'autre, et plus précisément d'une structure de guidage à l'autre, l'énergie transportée par le mode du guide dont l'indice effectif est différent de celui du mode correspondant dans l'autre guide n'étant pas transférée. Il suffit donc au bout de la longueur Lc, c'est-à-dire au bout de la distance pour laquelle toute l'énergie de l'un des deux modes a été transférée, que les coeurs des structures de guidage soient suffisamment séparés de manière à ce qu'il n'y ait plus d'interaction entre eux et plus de couplage possible. En pratique, pour tenir compte de la décroissance progressive du couplage après la séparation des deux structures de guidage, on prendra comme distance rectiligne commune aux deux structures une distance L inférieure à la longueur de couplage Lc ; la valeur de L est calculée de telle façon que toute l'énergie du mode transférable soit effectivement transférée, elle dépend en particulier de la façon dont s'effectue la séparation entre les deux structures. On choisit donc par exemple une structure de guidage comportant le coeur 1 pour laquelle l'indice effectif du mode TE, n1_{eff}TE, est très voisin de l'indice effectif du mode TM,n1_{eff}TM, lui-même étant égal à l'indice effectif du mode TM, n2_{eff}TM de la structure comportant le coeur 2. La structure de guidage comportant le coeur 2 est telle que l'indice effectif du mode TE, n2_{eff}TE soit au contraire assez différent de l'indice effectif du mode TM, n2_{eff}TM. Ainsi, l'énergie provenant de la propagation du mode TM dans le guide de coeur 1 pourra être complètement transférée dans le guide de coeur 2, tandis que l'énergie provenant de la propagation du mode TE restera dans le guide de coeur 1. Les composantes des modes TE et TM sont donc séparées.

La coupe représentée sur la figure 6 permet de mettre en évidence la séparation entre les deux coeurs 1 et 2, les deux coeurs n'étant plus superposés mais s'écartant spatialement selon ce mode de réalisation et transversalement d'une valeur a qui augmente au fur et à mesure que l'on s'éloigne du point de séparation entre ces guides, puis qui devient constante.

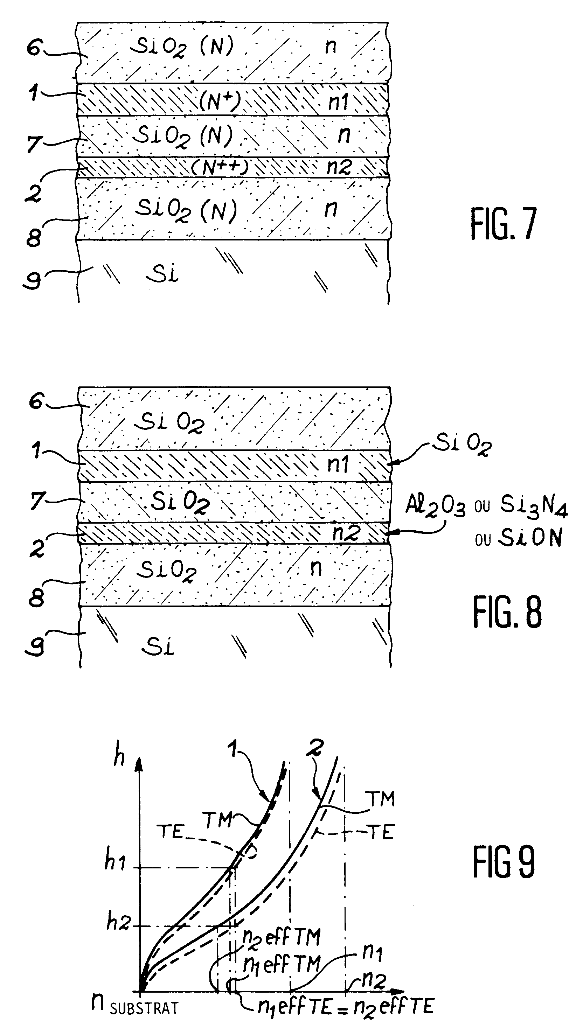

Sur la figure 7, on a représenté une coupe longitudinale du dispositif selon l'invention effectuée dans la partie A. Cette coupe est donc faite dans le sens de propagation des ondes. Elle permet d'illustrer un premier mode de réalisation de l'invention. On retrouve par conséquent les différentes couches de la structure. En premier lieu, un support 9 en silicium, une couche d'oxyde de silicium 8 d'indice de réfraction n, le coeur 2 d'indice de réfraction n2 qui est réalisé selon cette première variante de réalisation au moyen d'une couche d'oxyde de silicium (SiO₂) fortement dopé (N⁺⁺). On retrouve également la couche d'oxyde de silicium 7 d'indice n et en-dessus le coeur 1 d'indice n1 réalisé selon cette première variante de réalisation au moyen d'une couche d'oxyde de silicium faiblement dopé (N⁺) et au-dessus la couche d'oxyde de silicium 6 d'indice de réfraction n.

Sur la figure 8 on a également représenté la structure vue en coupe suivant un plan parallèle au sens de propagation des ondes, pris dans la partie A. Cette coupe permet également de mettre en évidence la structure superposée des couches suivant la deuxième, la troisième et la quatrième variantes de réalisation. Cette figure se distingue de la figure 7 dans le mode de réalisation de la couche 2, c'est-à-dire du coeur 2 qui peut être réalisé soit à partir de nitrure de silicium (Si₃N₄), soit à partir d'alumine Al₂O₃, soit à partir d'oxynitrure de silicium (SiON). D'autres matériaux d'indice de réfraction et de qualité optique convenables pouvant être obtenus par dépôt peuvent être utilisés. Les couches 6, 7, 8 peuvent être réalisées, tout comme celles qui figurent sur la figure 7, à partir d'oxyde de silicium, et le substrat 9 à partir de silicium. Ainsi, en prenant un coeur en oxyde de silicium faiblement dopé, on peut obtenir une variation d'indice de réfraction assez faible, c'est-à-dire un (n1-n) faible et en prenant soit du silicium fortement dopé, soit de l'alumine, soit du nitrure de silicium, soit de l'oxynitrure de silicium, on peut obtenir une variation d'indice élevé, c'est-à-dire un (n2-n) élevé.

Si l'on choisit une variation (n1-n) de l'ordre de quelques 10⁻³ qui correspond aux variations d'indice rencontrées dans les fibres, une hauteur h1 de l'ordre de 5µm, l'indice n1 étant égal à 1,46 et si l'on cherche à obtenir une égalité entre l'indice effectif n1_{eff}TE, n1_{eff}TM et n2_{eff}TM et une différence entre les indices effectifs n2_{eff}TE et n1_{eff}TE, on choisit un n2-n assez fort de l'ordre de 0,55, mais on peut également choisir un n2-n un petit peu plus faible, de l'ordre de 0,15, ce qui correspond à un indice de réfraction réel n2=1,61 (alumine). On choisira dans ce cas pour réaliser les conditions souhaitées une hauteur de coeur 2, h2, comprise entre 300 et 500 Å et on pourra également obtenir une égalité entre l'indice n1_{eff}TM et n2_{eff}TM et une différence entre l'indice n1_{eff}TE et n2_{eff}TE en choisissant un n2-n de l'ordre de 0,07, ce qui correspond à un indice n2=1,52, en prenant une hauteur h2 de coeur 2 comprise entre 2000 à 5000 Å et cela en choisissant pour le coeur 2 de l'oxyde de silicium fortement dopé (par exemple avec du phosphore ou du titane ou de germanium).

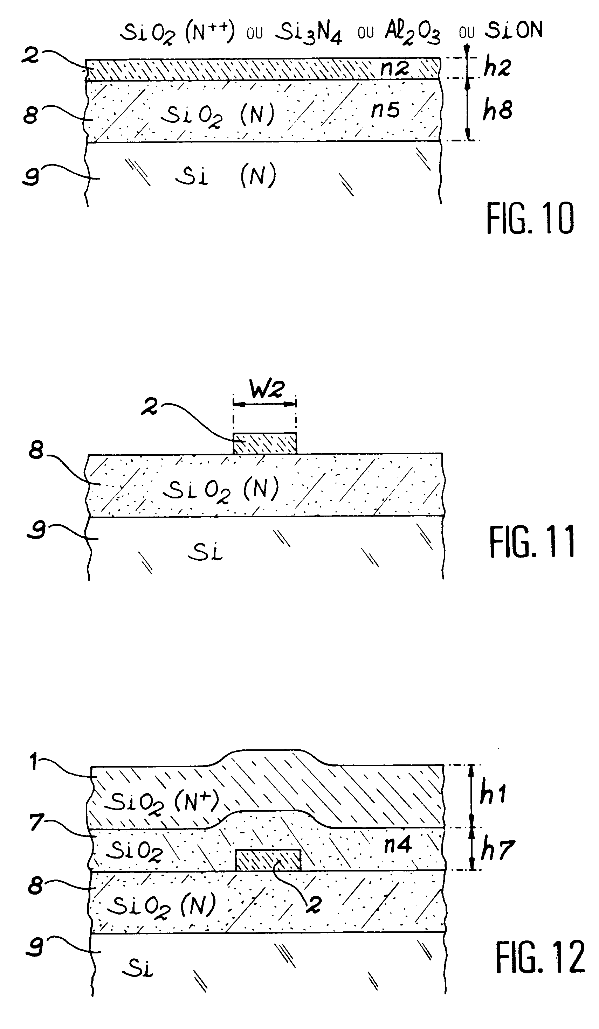

On peut obtenir une précision suffisante dans l'égalité entre les indices effectifs de l'un des deux modes (TE ou TM) par le contrôle de l'épaisseur et de l'indice de réfraction réel des structures. On a représenté sur la figure 9 la variation des indices effectifs pour chacun des modes TE, TM d'une part pour le coeur 1 et d'autre part pour le coeur 2 en fonction de l'épaisseur de ces coeurs. nₛ représente l'indice de réfraction du substrat, n1 et n2 représentent les indices de réfraction réels respectivement des coeurs 1 et 2. Pour un matériau donné et pour une bande de fréquence donnée, on trace de manière classique la courbe de l'indice effectif pour le mode TE et pour le mode TM pour chacun des deux coeurs. Puis on choisit sur les courbes correspondant à l'évolution de l'indice effectif des modes TE, TM, deux points pour lesquels l'indice effectif pour les modes TE ou TM est le même pour les deux coeurs. On repère à partir de ces deux points la valeur correspondante des épaisseurs de chaque bande constituant les coeurs 1 et 2. Le coeur 1 aura donc une épaisseur h1 et un indice effectif n1_{eff}TE qui est très voisin de l'indice effectif n1_{eff}TM et qui est égal à l'indice effectif n2_{eff}TE, l'indice effectif n2_{eff}TM étant différent de l'indice effectif n1_{eff}TM et de l'indice effectif n2_{eff}TE du coeur 2 qui aura donc une épaisseur h2.

Les figures 10 à 14 représentent chacune une étape d'un exemple de procédé de réalisation du dispositif selon l'invention.

On part donc d'un substrat en silicium 9 sur lequel on procède à un dépôt d'une couche 8 d'oxyde de silicium, l'épaisseur h8 de la couche 8 étant de l'ordre de 8 à 10 µm. On procède ensuite au dépôt de la couche 2 d'oxyde de silicium fortement dopé d'une épaisseur h2 sensiblement égale à 0,2 µm.

Le dopage se fait lors du dépôt et le dépôt se fait par une technique classique dénommée PECVD qui correspond à un dépôt par décomposition chimique en phase vapeur assistée par plasma. Le dopage se fait de manière classique et correspond à un dosage de l'ordre de 18% de phosphore en poids. Bien entendu, le dépôt de la couche 2 peut se faire par toute autre méthode équivalente et le dopage utilisé peut être du germanium, du titane ou d'autres dopants appropiés.

Sur la figure 11, on procède à une gravure partielle de la couche 2 d'oxyde de silicium fortement dopé afin d'obtenir une bande 2 telle que représentée sur la figure 4. La largeur W2 de la bande 2 est généralement de l'ordre de 3 à 6 µm suivant la valeur de l'indice de réfraction n2.

La figure 12 représente une étape du dépôt de la couche d'oxyde de silicium 7 recouvrant la couche d'oxyde de silicium 8 et le coeur 2, cette couche ayant une hauteur h7 de l'ordre de 1 à 3 µm. On a également représenté sur cette figure 12 l'étape de dépôt de la couche d'oxyde de silicium faiblement dopé 1 recouvrant la couche d'oxyde de silicium 7. Le dépôt a également été effectué par exemple par la technique classique PECVD, la couche présente une hauteur h1 sensiblement égale à 5 µm (cette hauteur est comparable au diamètre des fibres monomodes classiques par exemple). Le dopage est effectué lors du dépôt et il correspond par exemple à un dosage de 0 à 1% en phosphore. (Comme précédemment, le dopage peut être obtenu avec d'autres types de dopants).

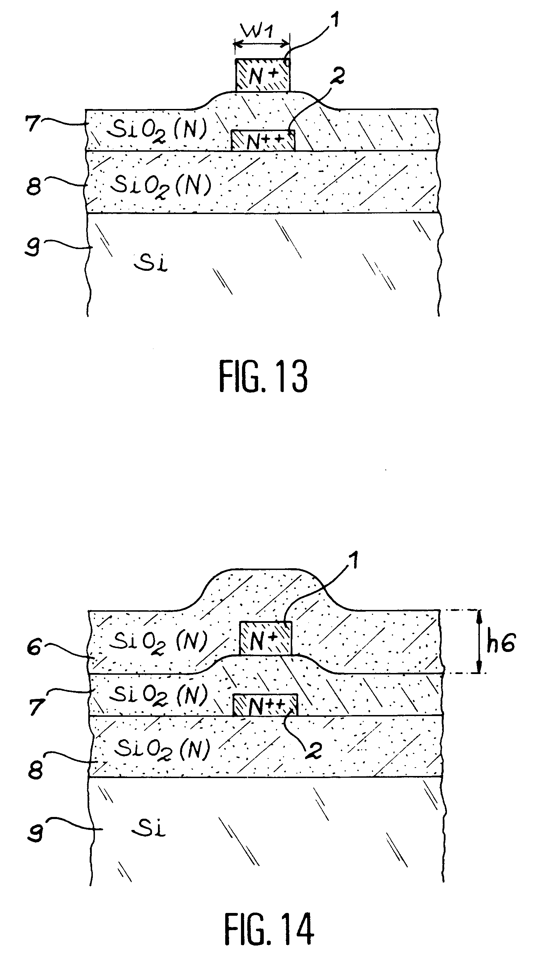

Sur la figure 13, on a représenté l'étape qui correspond à la gravure de la couche 1 permettant d'obtenir le coeur 1 ayant la forme d'une bande telle que représentée sur la figure 4. La largeur W1 de cette bande sera en général de l'ordre de 4 à 6 µm en accord avec les diamètres de coeurs des fibres optiques.

Sur la figure 14, on a représenté la dernière étape du procédé consistant en un dépôt de la couche 6 d'oxyde de silicium qui recouvre toute la surface mise à nue de la couche 7 et la surface du coeur 1, la hauteur h6 de cette couche est sensiblement égale à 10 µm. Dans ces conditions, la variation d'indice n2-n est égale à 7.10⁻² et la variation d'indice n1-n est égale à 5.10⁻³. Ces valeurs ont été définies pour une longueur d'onde de l'onde se propageant dans le dispositif égale à 1,3 µm, un coefficient de couplage pour le mode TM K=3.10⁻³, une longueur Lc de 500 µm et des rayons de courbure de l'ordre de quelques mm.

Bien entendu, les valeurs qui sont données correspondent à une application particulière. Les valeurs de l'ensemble de ces paramètres ne seront pas les mêmes si par exemple on utilise du nitrure de silicium ou de l'alumine ou de l'oxynitrure de silicium pour réaliser le coeur 2.

L'exemple de réalisation particulier qui a été donné, dont un procédé de réalisation a été décrit, correspond à une structure ayant des couches superposées dans lesquelles sont logés les coeurs 1, 2, ces coeurs étant également superposés dans la partie A où s'effectue la majeure partie du couplage. Une structure dans laquelle les deux coeurs 1, 2 seraient placés à proximité l'un de l'autre dans les deux couches superposées, c'est-à-dire pas directement en regard l'un de l'autre, mais qui permettraient un couplage dans la partie A, reste bien évidemment dans le cadre de la présente invention.

Par ailleurs, les bandes de la partie B des deux structures guidantes sont respectivement courbées dans la représentation de la figure 4, mais bien entendu il suffit qu'une seule de ces bandes soit courbée et écartée suffisamment de l'autre bande qui peut rester rectiligne, pour éviter tout couplage.

## Revendications

1. Dispositif d'optique intégrée pour séparer les composantes polarisées d'un champ électromagnétique guidé, constitué par un coupleur comprenant une première et une deuxième structures de guidage d'ondes électromagnétiques comprenant chacune un coeur (1, 2), espacés par un intervalle prédéterminé de manière à permettre un couplage d' énergie de l'une des structures vers l'autre, ces structures admettant des modes guidés qui ont des indices effectifs différents pour une première composante polarisée (TE ou TM) et égaux pour une deuxième composante polarisée (TM ou TE) de ce champ, l'intervalle entre les deux coeurs étant constant sur une distance également prédéterminée égale à la distance (Lc) au bout de laquelle un transfert total d'énergie a lieu, pour l'énergie relative à la deuxième composante polarisée, de l'une des stuctures vers l'autre, l'intervalle séparant les deux structures augmentant au-delà de cette distance de sorte que l'on obtienne ainsi une séparation des composantes polarisées du champ, caractérisé en ce que ledit coeur (1) de la première structure de guidage est constitué d'une bande de matériau d'indice réel n1 comprise entre une première et une deuxième couches (6, 7) de matériau d'indices respectifs n3 et n4, en ce que ledit coeur (2) de la deuxième structure de guidage est constitué d'une bande de matériau d'indice réel n2 comprise entre la deuxième et une troisième couches (7, 8) de matériau d'indices respectifs n4 et n5, lesdites première, deuxième et troisième couches (6,7,8) étant superposées, les bandes (1, 2) constituant chacun des coeurs étant dans leur partie rectiligne (A) à proximité l'une de l'autre et logées dans des couches (6, 7) distinctes, en ce que l'une des structures de guidage (1,6,7) présente une faible différence d'indice de réfraction (n₁-n) entre le coeur (1) et les couches (6,7) entre lesquelles il est intercalé, la différence d'indice de réfraction (n₂-n) entre l'autre coeur (2) de l'autre structure et les couches (7,8) entre lesquelles il est intercalé étant forte, et en ce que les conditions requises en ce qui concerne les indices effectifs pour les premiere et deuxieme composantes polarisees sont satisfaites grâce au choix approprié des épaisseurs respectives des deux structures de guidage de manière à réaliser un transfert d'énergie d'une structure à l' autre pour la seconde composante polarisée et pas de transfert d'énergie pour la première composante polarisée.

2. Dispositif selon la revendication 1, caractérisé en ce que les bandes constituant les coeurs (1,2) desdites structures de guidage comportent chacune une partie rectiligne (A), lesdites parties rectilignes étant espacées l'une de l'autre par un intervalle (e) constant et situées dans deux plans parallèles, et une partie courbée (B), chaque partie courbée étant dans le prolongement de la partie rectiligne correspondante, et lesdites parties courbées étant espacées l'une de l'autre d'un intervalle croissant de manière à ce qu'il n'y ait plus aucun couplage entre les deux structures.

3. Dispositif selon l'une quelconque des revendications 1 ou 2, caractérisé en ce que la bande de matériau d'indice n1 formant le coeur (1) de la première structure est constituée d'oxyde de silicium faiblement dopé, et en ce que la bande de matériau d'indice n2 formant le coeur (2) de la deuxième structure est constituée d'oxyde de silicium fortement dopé, les première, deuxième et troisième couches de ces structures étant constituées d'oxyde de silicium.

4. Dispositif selon l'une quelconque des revendications 1 ou 2, caractérisé en ce que la bande (1) de matériau d'indice n1 formant le coeur de la première structure est constituée d'oxyde de silicium faiblement dopé et en ce que la bande (2) de matériau d'indice n2 formant le coeur de la seconde structure est constituée de nitrure de silicium ou d'alumine ou d'oxynitrure de silicium, les première, deuxième et troisième couches de ces structures étant constituées d'oxyde de silicium.

5. Procédé pour la fabrication du dispositif d'optique intégrée selon l'une quelconque des revendications 1 à 4, caractérisé en ce qu'il comprend successivement les étapes suivantes :
- dépôt sur un substrat (9) d'une couche (8) d'indice n5 et d'épaisseur h8, destinée à constituer ladite troisième couche,
- dépôt, sur la couche précédente, d'une couche (2) d'indice n2 et d'épaisseur h2,
- gravure de cette couche (2) d'indice n2 de manière à obtenir une bande de largeur prédéterminée formant le coeur (2) d'indice n2 de ladite seconde structure de guidage, ladite bande ayant une première partie sensiblement rectiligne et une seconde partie courbée,
- dépôt, au-dessus de la couche d'indice n5 et de la bande d'indice n2, d'une couche (7) d'indice n4 et d'epaisseur h7, destinée à constituer ladite seconde couche
- dépôt, sur la couche précédente, d'une couche (1) d'indice n1 et d'épaisseur h1,
- gravure de cette couche (1) d'indice n1 de manière à obtenir une bande formant le coeur (1) de ladite première structure de guidage, ladite bande (1) ayant une première partie sensiblement rectiligne de longueur prédéterminée (L) située à proximité de la première partie rectiligne de l'autre bande sur la longueur prédéterminée (L) de guidage et une deuxième partie, les deuxièmes parties des bandes d'indices respectifs n2 et n1 s'écartant l'une de l'autre, et
- dépôt d'un couche (6) d'indice n3 sur la couche (7) d'indice n4 et sur la bande (1) d'indice n1, destinée à constituer ladite première couche, les indices de réfraction des différentes couches déposées (8,2,7,1,6) étant choisis de façon que la différence d'indice entre le coeur (1) de l'une des structure de guidage et les couches (6,7) entre lesquelles il est intercalé est faible, et la difference d'indice entre le coeur (2) de l'autre structure de guidage et les couches (7,8) entre lesquelles il est intercalé est forte, et les épaisseurs respectives des deux structures de guidage étant choisies, en fonction desdits indices selectionnés, de façon à satisfaire auxdites conditions requises en ce qui concerne les indices effectifs pour les première et seconde composantes polarisées.

## Claims

1. Integrated optical device for separating the polarized components of a guided electromagnetic field, constituted by a coupler comprising a first and a second electromagnetic wave guidance structures, each having a core (1,2), spaced by a predetermined interval in order to permit a coupling of energy from one of the structures towards the other, said structures admitting guided modes having different effective indices for a first polarized component (TE or TM) and equal for a second polarized component (TM or TE) of said field, the interval between the two cores being constant over a predetermined distance equal to the distance (Lc) at the end of which a total energy transfer takes place for the energy relative to the second polarized component, from one of the structures towards the other, the interval separating the two structures increasing beyond said distance in such a way that there is a separation of the polarized components of the field, characterized in that the core (1) of the first guidance structure is constituted by a strip of material having a real index n1 between a first and a second layer (6,7) of material having respective indices n3 and n4, in that the core (2) of the second guidance structure is constituted by a strip of material of real index n2 between the second and third layers (7,8) of material having respective indices n4 and n5, said first, second and third layers (6,7,8) being superimposed, the strips (1,2) each constituting cores being in their rectilinear part (A) in the vicinity of one another and located in separate layers (6,7), in that one of the guidance structures (1,6,7) has a small refractive index difference n1-n between the core (1) and the layer (6,7) between which it is placed, the refractive index difference n2-n between the other core (2) and the other structure and the layers (7,8) between which it is placed being high and in that the necessary conditions with respect to the effective indices for the first and second polarized components are satisfied as a result of the appropriate choice of the respective thicknesses of the two guidance structures, so as to bring about an energy transfer from one structure to the other for the second polarized component and no energy transfer for the first polarized component.

2. Device according to claim 1, characterized in that the strips constituting the cores (1,2) of said guidance structures have in each case a rectilinear part (A), said rectilinear parts being spaced from one another by a constant interval (e) and located in two parallel planes, and a curved part (B), each curved part being in the extension of the corresponding rectilinear part and said curved parts being spaced from one another by an increasing interval in such a way that there is no longer any coupling between the two structures.

3. Device according to either of the claims 1 and 2, characterized in that the strip of material of index n1 forming the core (1) of the first structure is made from weakly doped silicon dioxide and in that the strip of material of index n2 forming the core (2) of the second structure is made from strongly doped silicon dioxide, the first, second and third layers of these structures being made from silicon dioxide.

4. Device according to either of the claims 1 and 2, characterized in that the strip (1) of material of index n1 forming the core of the first structure is made from weakly doped silicon dioxide and in that the strip (2) of material of index n2 forming the core of the second structure is made from silicon nitride, alumina or silicon oxynitride, the first, second and third layers of said structures being made from silicon dioxide.

5. Method for the production of the integrated optical device according to any one of the claims 1 to 4, characterized in that it successively comprises the following stages:
- deposition on a substrate (9) of a layer (8) of index n5 and thickness h8 for forming said third layer,
- deposition on the preceding layer of a layer (2) of index n2 and thickness h2,
- etching of said layer (2) of index n2 in such a way as to obtain a strip of predetermined width forming the core (2) of index n2 of said second guidance structure, said strip having a first substantially rectilinear part and a second curved part,
- deposition above the layers of index n5 of the strip of index n2 of a layer (7) of index n4 and thickness h7 for forming said second layer,
- deposition on the preceding layer of a layer (1) of index n1 and thickness h1,
- etching of said layer (1) of index n1 so as to obtain a strip forming the core (1) of said first guidance structure, said strip (1) having a first substantially rectilinear part of predetermined length (L) located in the vicinity of the first rectilinear part of the other strip over the predetermined guidance length (L) and a second part, the second parts of the strips of respective indices n2 and n1 being spaced from one another, deposition of a layer (6) of index n3 on the layer (7) of index n4 and on the strip (1) of index n1, which will form said first layer, the refractive indices of the different deposited layers (8,2,7,1,6) being chosen in such a way that the index difference between the core (1) of one of the guidance structures and the layers (6,7) between which it is placed is small and the index difference between the core (2) of the other guidance structure and the layers (7,8) between which it is placed is large and the respective thicknesses of the two guidance structures are chosen as a function of said selected indices, so as to satisfy the necessary conditions with respect to the effective indices for the first and second polarized components.

## Patentansprüche

1. Integriert-optische Vorrichtung zur Trennung der Polarisationskomponenten eines geführten elektromagnetischen Feldes, gebildet aus einem Koppler, der eine erste und eine zweite Struktur zur Führung elektromagnetischer Wellen umfaßt, die jeweils einen Kern (1, 2) umfassen, Kerne, die durch einen vorher bestimmten Zwischenraum voneinander getrennt sind, um eine Kopplung der Energie von der einen Struktur zu der anderen hin zu ermöglichen, wobei diese Strukturen geführte Moden zulassen, die verschiedene effektive Indizes für eine erste Polarisationskomponente (TE oder TM) und gleiche Indizes für eine zweite Polarisationskomponente (TM oder TE) dieses Feldes haben, wobei der Zwischenraum zwischen den beiden Kernen auf einer ebenfalls zuvor gleich der Strecke (Lc) bestimmten Strecke, an deren Ende ein vollständiger Transfer der Energie, soweit es die zur zweiten Polarisationskomponente gehörende Energie betrifft, von der einen Struktur zu der anderen hin stattfindet, konstant ist, während der die beiden Strukturen trennende Zwischenraum jenseits dieser Strecke sich vergrößert, so daß man auf diese Art eine Trennung der Polarisationskomponenten des Feldes erhält,
dadurch gekennzeichnet, daß genannter Kern (1) der ersten Struktur zur Führung aus einem Streifen aus Material mit reellem Index n1 besteht, der zwischen einer ersten und einer zweiten Schicht (6, 7) aus Materialien mit den Indizes n3 bzw. n4 eingeschlossen ist,
daß genannter Kern (2) der zweiten Struktur zur Führung aus einem Streifen aus Material mit reellem Index n2 besteht, der zwischen der zweiten und einer dritten Schicht (7, 8) aus Materialien mit den Indizes n4 bzw. n5 eingeschlossen ist, wobei genannte erste, zweite und dritte Schicht (6, 7, 8) übereinanderliegend sind und die Streifen (1, 2), die jeweils Kerne bilden, in ihrem geradlinigen Teil (A) sich nahe beieinander und in verschiedenen Schichten (6, 7) befinden,
daß die eine Struktur zur Führung (1, 6, 7) eine geringe Brechungsindexdifferenz n1-n zwischen dem Kern (1) und den Schichten (6, 7), zwischen die er eingeschoben ist, aufweist, während die Brechungsindexdifferenz n2-n zwischen dem anderen Kern (2) der anderen Struktur und den Schichten (7, 8), zwischen die er eingeschoben ist, groß ist,
und daß die erforderlichen Bedingungen hinsichtlich der effektiven Indizes für die erste und die zweite Polarisationskomponente dank einer geeigneten Wahl der jeweiligen Dicke der zwei Strukturen zur Führung erfüllt sind, um für die zweite Polarisationskomponente einen Energietransfer von einer Struktur zur anderen hin, für die erste Polarisationskomponente keinen Energietransfer zu bewirken.

2. Vorrichtung nach Anspruch 1, dadurch gekennzeichnet, daß die Streifen, die die Kerne (1, 2) der genannten Strukturen zur Führung bilden, jeweils einen geradlinigen Teil (A), wobei diese geradlinigen Teile voneinander durch einen konstanten Zwischenraum (e) getrennt sind und in zwei parallelen Ebenen gelegen sind, und einen gekrümmten Teil (B) enthalten, wobei jeder gekrümmte Teil (B) in der Verlängerung des entsprechenden geradlinigen Teils liegt und die genannten gekrümmten Teile voneinander durch einen anwachsenden Zwischenraum getrennt sind, so daß keine Kopplung mehr zwischen den zwei Strukturen besteht.

3. Vorrichtung nach einem der Ansprüche 1 oder 2, dadurch gekennzeichnet, daß der Streifen aus Material mit dem Index n1, der den Kern (1) der ersten Struktur bildet, aus schwach dotiertem Siliciumoxid besteht und daß der Streifen aus Material mit dem Index n2, der den Kern (2) der zweiten Struktur bildet, aus stark dotiertem Siliciumoxid besteht, während die erste, zweite und dritte Schicht dieser Strukturen aus Siliciumoxid bestehen.

4. Vorrichtung nach einem der Ansprüche 1 oder 2, dadurch gekennzeichnet, daß der Streifen (1) aus Material mit dem Index n1, der den Kern der ersten Struktur bildet, aus schwach dotiertem Siliciumoxid besteht und daß der Streifen (2) aus Material mit dem Index n2, der den Kern der zweiten Struktur bildet, aus Siliciumnitrid oder aus Aluminiumoxid oder aus Siliciumoxynitrid besteht, während die erste, zweite und dritte Schicht dieser Strukturen aus Siliciumoxid bestehen.

5. Verfahren zur Herstellung der integriert-optischen Vorrichtung nach einem der Ansprüche 1 bis 4, dadurch gekennzeichnet, daß es nacheinander die folgenden Schritte umfaßt:
- Abscheiden einer Schicht (8) mit dem Index n5 und der Dicke h8, die dazu bestimmt ist, genannte dritte Schicht zu bilden, auf einem Substrat (9),
- Abscheiden einer Schicht (2) mit dem Index n2 und der Dicke h2 auf der vorigen Schicht,
- Ätzen dieser Schicht (2) mit dem Index n2, um einen Streifen vorher bestimmter Breite zu erhalten, der den Kern (2) mit dem Index n2 der genannten zweiten Struktur zur Führung bildet, wobei dieser Streifen einen ersten, im wesentlichen geradlinigen Teil und einen zweiten gekrümmten Teil hat,
- Abscheiden einer Schicht (7) mit dem Index n4 und der Dicke h7, die dazu bestimmt ist, genannte zweite Schicht zu bilden, auf der Schicht mit dem Index n5 und auf dem Streifen mit dem Index n2,
- Abscheiden einer Schicht (1) des Index n1 und der Dicke h1 auf der vorigen Schicht,
- Ätzen dieser Schicht (1) mit dem Index n1, um einen Streifen, der den Kern (1) der genannten ersten Struktur zur Führung bildet, zu erhalten, wobei der genannte Streifen (1) einen ersten, im wesentlichen geradlinigen Teil mit vorher bestimmter Länge (L), der auf der zuvor bestimmten Länge (L) der Führung in der Nähe des ersten geradlinigen Teils des anderen Streifens liegt, sowie einen zweiten Teil hat, wobei die zweiten Teile der Streifen mit den Indizes n2 bzw. n1 sich voneinander entfernen, und
- Abscheiden einer Schicht (6) mit dem Index n3, die dazu bestimmt ist, genannte erste Schicht zu bilden, auf der Schicht (7) mit dem Index n4 und auf dem Streifen (1) mit dem Index n1, wobei die Brechungsindizes der verschiedenen abgeschiedenen Schichten (8, 2, 7, 1, 6) derart gewählt sind, daß die Indexdifferenz zwischen dem Kern (1) der einen Struktur zur Führung und den Schichten (6, 7), zwischen die er eingeschoben ist, gering ist und die Indexdifferenz zwischen dem Kern (2) der anderen Struktur zur Führung und den Schichten (7, 8), zwischen die er eingeschoben ist, groß ist, und die jeweiligen Dicken der zwei Strukturen zur Führung in Abhängigkeit von genannten gewählten Indizes gewählt sind, um genannte Bedingungen zu erfüllen, die hinsichtlich der effektiven Indizes für die erste und zweite Polarisationskomponente erforderlich sind.
